# EUROPEAN PATENT APPLICATION

(11) **EP 1 830 594 A1**
(43) Date of publication of application: **05.09.2007**
(21) Application number: 06300195.2
(22) Date of filing: 03.03.2006
(51) Int. Cl.: H04Q 7/36, H04L 12/56, H04B 7/26

(54) **Method for performing resource allocation in a radio communication system**

(71) Applicant: Alcatel Lucent, 75008 Paris (FR)
(72) Inventor: Münzner, Roland, 73266 Bissingen an der Teck (DE)
(74) Representative: Wetzel, Emmanuelle

(57) **Abstract**

The present invention relates to a method for performing resource allocation in a radio communication system, said radio communication system being dedicated to send frames on an air interface, each frame comprising a plurality of bursts. According to the present invention, the method comprising the step of:
- Sorting the bursts to be contained in said frame by depending on a parameter related to the size of the resource allocated to said bursts;
- Performing said resource allocation depending on said sorting;
- Transmitting said frame in said radio communication system.

## Description

Background of the Invention

The present invention relates to a resource allocation method in a radio communication system.

In radio communication systems resource allocation is a task which should be performed by taking especially the interference level into account and keeping it in an acceptable range to ensure the efficiency of the network.

Known interference cancellation methods consist in coordinating the resource allocation between different neighbour base stations in a manner that interference is minimized. Such solutions nevertheless present the drawback to show a poor usage of the resources in the system.

Methods for keeping the interference level low consist for example in frequency reuse scheme with a large frequency reuse distance. In such systems a resource allocated to a first base station is only allocated simultaneously to a second base station separated from the first base station by a sufficient distance. Thus, the signal from the first base station is attenuated enough at the second base station so that this interference is not damaging the network performance.

The trend in radio communication network is however to reduce the frequency reuse distance to increase the capacity of the networks. This is especially a requirement for high density areas where the number of potential users may be very high so that the resource must be efficiently allocated. In such cases, interference occur between resources simultaneously allocated to several users.

Example for such radio communication systems may be based on OFDM/OFDMA air interface.

OFDMA systems, especially if they are equipped with beamforming technology (in which the multi antenna system is able to generate very directive beams adaptively following the moves of the user) should preferably be deployed with a short frequency reuse distance. Such systems are for example networks as defined in IEEE 802.16e and at the WIMAX forum.

Beamforming technology at the base station of cellular radio access systems allows to reduce the level of interference for both up-link as well as down-link transmissions and thus to strongly reduce the frequency reuse distance in the system at still high performance of the network. Two basic methods for reducing the level of interference are known which in principle can be applied to up-link and down-link transmissions: First the narrowness of the antenna patterns (beams) - adaptively being steered into the direction of an individual terminal station - provides for an implicit suppression of all interfering signals, that are found outside the given beam. Second adaptive array processing allows to actively position nulls in the antenna pattern into the direction of the strongest interfering signals. For both methods the efficiency of interference suppression strongly depends on the given interference situation, notably on the number of contemporaneous interfering signals as well as on the stability of the interference situation.

Active interference cancellation can be accomplished only for a rather restricted number of interfering signals. The maximum number of interfering signals, that can be efficiently cancelled by a multi antenna receiver based on N antennas thereby is generally given by N-1. In order to allow efficient mitigation of inter-cell interference in a cellular OFDMA system at low frequency re-use distances, the number of strong interferers, that occur within a given up-link or down-link resource allocation, therefore has to be kept sufficiently low.

Consequently, resource allocations have to be made by radio resource management in such a way that the number of interfering signals from other cells during a given transmission burst is kept as small as possible.

For OFDMA systems, this means that the number of resource allocations in the time-frequency domain in the interfering cells, that do overlap with given resource allocation of interest, has to be kept as low as possible. Ideally only one resource allocation from each interfering cell would overlap with a given resource allocation.

Equivalently for interference reduction through directivity of the adaptive antenna patterns (beams) the probability of interference hits from neighboring cells is the dominant factor to determine the efficiency of interference reduction. When minimizing the number of resource allacations in time-frequency domain in the interfering cells, that do overlap with given resource allocation of interest, the probability of interference hits from is directly reduced.

A standard solutions to address the above problem consists in fully coordinating the resource allocations between different base stations in such a way that for each given resource allocation only a single resource allocation from each interfering cell will overlap. This provides for the highest efficiency for inter-cell interference cancellation and the lowest probability of interference hits.

The full coordination of radio resource scheduling between the individual base stations, however, strongly reduces the capacity of each of the base stations which will only be able to respond to the requirements coming from its own traffic allocations in a very restricted manner.

Moreover this full coordination requires most of the time a centralized entity (Radio Network Controller) which is responsible for the scheduling. The trend is however to reduce the functionality of such a centralized entity in the future radio communication network and to limit it to very few absolutely necessary functions. Other functions which are currently handled at the centralized entity should preferably be migrated to the base stations of the radio communication system. Consequently efficient resource allocation methods requiring no coordination between the base stations would be helpful to fulfill these requirements.

A particular object of the present invention is to provide a resource allocation method showing better efficiency in resource allocations in system with short frequency reuse distance.

Another object of the present invention is to provide a resource allocation method which keeps the restrictions on radio resource scheduling for each individual base station as low as possible while providing for a very low number of interfering signals per resource allocation.

Another object of the invention is to provide a corresponding base station implementing the resource allocation method.

Summary of the Invention

These objects, and others that appear below, are achieved by a method for according to claim 1, and a base station according to claim 10.

According to the present invention, the interference is minimised in that the burst building the frames are arranged in such a manner that they are transmitted in increasing size or decreasing size order, the size of the burst being in the framework of this invention defined as a parameter related to the size of the resource that is allocated to each burst.

Consequently, a short burst emitted by one base station is expected to interfere with only one another short burst sent by another base station while a long burst is as well expected to interfere with only one another long burst. This results, most of the time, in keeping the number of interferers as low as only one single interferer.

The method according to the present invention presents the advantage to reduce the interference without coordination at the resource allocation level between the different neighboring base stations constituting the system.

Another advantage of the present invention consists in showing optimized performance especially when beamforming is performed additionally to this method at the base stations or to highly sectorised systems. For systems using adaptive beamforming technology a strongly increased efficiency of interference reduction is achieved when minimizing the number of resource allocations in interfering cells, that do overlap with each of the given resource allocations of interest. For systems employing interference cancellation techniques at the base station this is due to the fact that the number of interfering signals, that can be explicitly cancelled, is restricted by the number of antennas used at the base station. For systems employing the directivity of the individual beams for interference reduction this is due to the strongly reduced number of interference hits which also holds for highly sectorised cellular systems, employing fixed antennas with high directivity within each of the sectors.

Further advantageous features of the invention are defined in the dependent claims.

Brief Description of the Drawings

Other characteristics and advantages of the invention will appear on reading the following description of a preferred embodiment given by way of non-limiting illustrations, and from the accompanying drawings, in which:
- Figure 1 shows a prior art arrangement of the bursts constituting a frame according to the present invention;
- Figure 2 shows an arrangement of the bursts constituting a frame according to the present invention;
- Figure 3 shows a base station implementing the method according to the present invention.

Detailed Description of the Invention

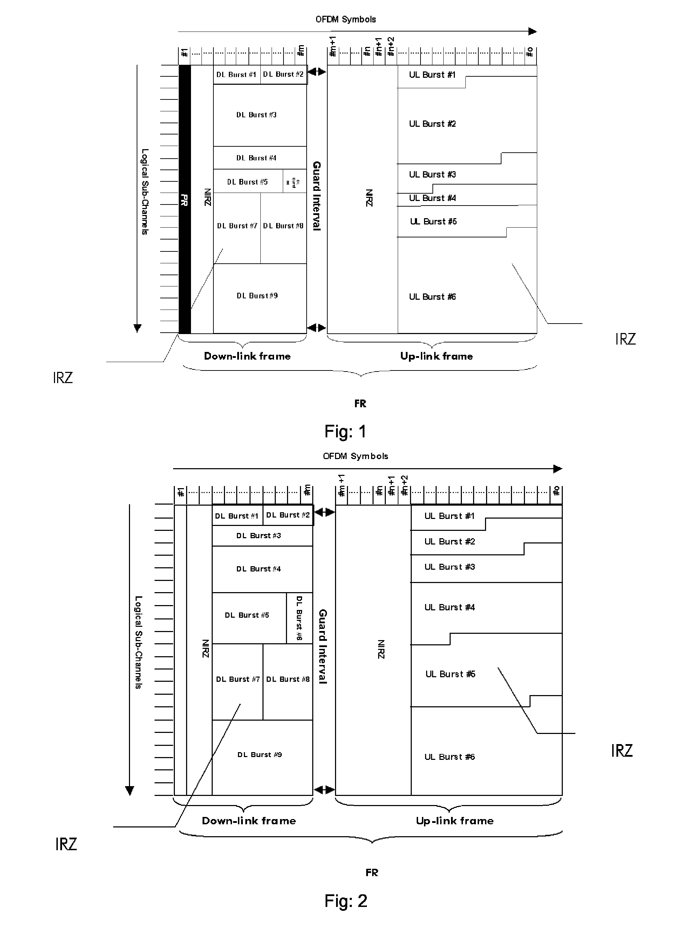

Figure 1 shows a prior art arrangement of the burst constituting a frame according to the present invention. This embodiment is illustrated using a multi channel communication network using OFDMA as technology on each of the sub-channels. In this context, a frame comprises bursts which themselves are constituted of OFDM symbols sent on the different sub-channels.

A frame FR to be transferred in a radio communication network is comprising a preamble PR, optionally a part of the frame transmission zone NIRZ where no interference reduction is employed (e.g. because beamforming technology is not employed for this transmission zone) as well as a part of the frame or zone transmission zone IRZ where interference reduction is applied (e.g. because the system is operating in beamforming mode in this transmission zone). All of the transmission zones are built from a plurality of bursts DL Burst #1, ..., DL Burst #9, UL Burst #1, UL Burst #6. Each burst comprises information related to one end user. The preamble comprise preferably pilot tones.

In this prior art solution, the bursts are put in the frame as they are scheduled from a prior art resource allocation module without further processing.

Consequently, it often happens that a long burst scheduled at a first base station may interfere with several short bursts scheduled at a second base station resulting in a high number of different interfering signals on the particular burst which results in low efficiency of interference reduction and thus in a high level of interference in the system.

Figure 2 shows an arrangement of the burst constituting a frame according to the present invention. This embodiment is illustrated in a multichannel communication network using OFDMA as technology on each sub-channels. In this context a frame comprises bursts mapped on OFDM symbols sent on the different sub-channels. OFMDA allows resource allocations in frequency domain and in the time domain where orthogonality of the resource elements in frequency domain, the so-called sub-carriers, allow for a narrow spacing of the latter ones and thus and efficient usage of the frequency resource. A burst which is destined to a user comprises consequently a frequency extension and a time extension.

It will nevertheless be clear for people skilled in the art that this invention applies as well to only FDMA based or only TDMA based system. Hence it applies as well to other multiple access systems without departing from the scope of the present invention.

In this embodiment of the invention, the radio communication system is a TDD (Time Division Duplex) system so that first a downlink frame is sent followed by an uplink frame. A person skilled in the art would nevertheless have no difficulty to map the present invention on other type of radio communication networks using FDD (Frequency Division Duplex).

A frame FR to be transferred in a radio communication network is comprising a preamble PR, optionally a part of the frame transmission zone where no interference reduction is employed (e.g. because beamforming technology is not employed for this transmission zone) as well as a part of the frame or zone transmission zone where interference reduction is applied (e.g. because the system is operating in beamforming mode in this transmission zone). All of the transmission zones are built from a plurality of bursts. Each burst comprises information related to one end user. The preamble comprise preferably pilot tones. It will be clear for those skilled in the art that the invention only concerns the bursts contained in the part for the frame or transmission zone where interference reduction is targeted, but not the preamble part or the part of the frame or transmission zone where no interference reduction is targeted, so that the invention may apply even if one or both of these parts are missing or containing other type of information.

According to the present invention, the bursts are arranged in the frame in such a way that they are sorted depending on a parameter related to the size of the resource allocated to this burst. As previously seen the resource in OFDMA are showing a frequency and a time extension consequently following sorting may be envisaged in the framework of the present invention:

A parameter related to the size of the resource may be in a first embodiment of the present invention the frequency extension of the burst. Ie the number of frequency sub channel allocated for the transmission of the bursts. Then the bursts may be sorted in increasing or decreasing size of the number of sub channels allocated to them.

The following will describe in more details the case where the frequency extension of the burst is first taken into account in order to sort the bursts by size. This is illustrated in the downlink part of the frame illustrated in fig 1. In this case, for each burst the number of sub carriers over which the burst should be sent is defined and known at the base station when giving the resource allocation.

In this case, DL bursts #1, #2, #3 are expected to use 2 logical sub channels, DL bursts #4, #5, #6 are expected to use 4 logical sub channels, DL bursts #7, #8, #9 are expected to use 6 logical sub channels.

For this type of scheduling the scheduler preferably gives an indication on the number of logical sub channel each burst occupies. Then the sorting is performed then the scheduler determines exactly the logical sub channels which should be allocated to each bursts.

Alternatively, a parameter related to the size of the resource may be in a second embodiment of the present invention the time extension of the burst. Ie the number of symbols constituting the different bursts. Then the bursts may be sorted in increasing or decreasing number of symbols they are constituted of. This embodiment is illustrated by the uplink scheduling shown on Figure 2: for the uplink part of the frame the arrangement of the bursts in the frame first take into account time extension of the burst: in this case, UL burst #1 is the shortest one followed by UL burst #2, UL burst #3, UL burst #4, UL burst #5 and finally UL burst #6 which is the longest one.

In a further embodiment of the present invention, the sorting of the bursts according to their size may only be performed for one of the transmission direction (uplink or downlink).

In an alternative embodiment of the present invention, stronger restrictions may be imposed to the radio resource scheduling for each individual base station. Fixed regions are defined, in the frequency-time domain, that are the same for all base stations, a minimum size of the resource allocations being prescribed for each of these fixed regions (defined as an extension in frequency, time or both). For each of these regions, then ordering by size of the resource allocations is individually done in addition.

In this embodiment, the frame is subdivided in at least two regions, each region being dedicated to receive bursts having a size in a predefined range. Region 1 will for example comprise bursts having a length between 0 and L1, Region 2 will comprise bursts having a length between L1 and L2 and so on. This presents the advantage to guaranty that, when two frames are interfering, the burst contained in the different containers have similar length so that the assumption that when bursts having approximately the same length are colliding most of the time only one collision will happen. This embodiment is of particular interest in the case where different base stations are expected to have a rather different distribution in the size of their resource allocations. This nevertheless reduces the capacity of the system since it is highly probable that the frame cannot be optimally filled in.

In a further embodiment of the present invention, the invention may only be applied to one part of the frame, no such sorting being applied on the remaining part of the frame. Preferably, one part of the frame payload is used for beamforming purpose and thus sorted according to the present invention in order to provide for efficient interference reduction while the invention is not used on the remaining part of the payload.

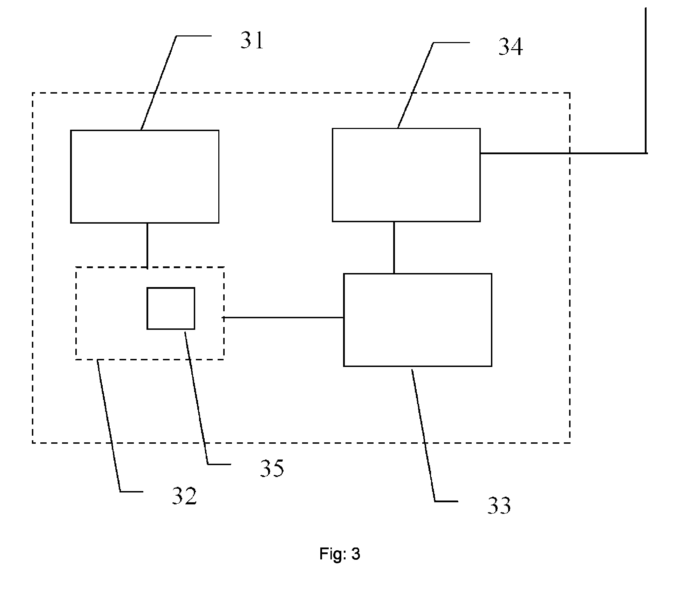

Figure 3 shows a base station implementing the method according to the present invention.

A base station according to the present invention comprises a Layer 3 module 31 linked to a layer 2 module 32, linked to a physical layer module 33, itself linked to a Radio Frequency module 34. Layer 3 module implement a transport protocol as IP or ATM and make payload data available for layer 2 module 32 for downlink transmission or extract payload data out of the frame received at Layer 2 module 32 in the uplink direction.

Layer 2 Module 32 comprises a scheduler (or resource allocation module) 35 comprising means for implementing the method according to the present invention. In the downlink direction, the scheduler comprises means for building the frames by generating a frame header and scheduling the payload data from layer 3 Module 31 as bursts in the frame. Similarly, in the uplink direction, the scheduler comprises means for extracting the bursts out of a frame knowing the scheduling algorithm which was used for scheduling the bursts in the frame.

According to the present invention, scheduler 35 cooperates with means for sorting bursts to be transmitted according to a parameter related to the size of the resource allocated to the burst. Preferably, the bursts are sorted either according to the number of symbols they contain alternatively they are sorted according to the number of logical sub channels they occupy. Resource allocation module 35 then comprises means for performing said resource allocation depending on said sorting; and means for distributing the sorted bursts on the frame structure which preferably shows a frequency as well as a time extension.

Layer 2 module 32 is then connected to physical layer 33 in which functionalities as beamforming, modulation/demodulation, Forward Error Correction are implemented.

Further, physical layer 33 is connected to the Radio Frequency part of the base station comprising a up/down converter and an amplifier linked to an antenna.

## Claims

1. Method for performing resource allocation in a radio communication system, said radio communication system being dedicated to send frames on an air interface, each frame comprising a plurality of bursts, said method comprising the step of: - Sorting the bursts to be contained in said frame by depending on a parameter related to the size of the resource allocated to said bursts; - Performing said resource allocation depending on said sorting; - Transmitting said frame in said radio communication system.

2. Method according to claim 1, wherein the frame has a frequency extension, said sorting of the bursts being performed taking into account the frequency extension size of the resource allocated to said burst.

3. Method according to claim 1, wherein the frame has a time extension, said sorting of the bursts being performed by taking into account the number of symbols contained in said burst.

4. Method according to claim 1, wherein said sorting is performed in increasing order of said parameter related to the size of the resource allocated to said bursts.

5. Method according to claim 1, wherein said sorting is performed in decreasing order of said parameter related to the size of the resource allocated to said bursts.

6. Method according to claim 1, wherein said sorting is only performed a portion of said bursts.

7. Method according to claim 1, wherein said radio communication system is using Orthogonal Frequency Division Multiple Access technology on the air interface, each frame having a time and frequency extension.

8. Method according to claim 7, wherein said radio communication system uses beamforming technology at base stations.

9. Method according to claim 1, further comprising the step of defining at least two regions in said frame, each region being adapted to contain bursts for which said parameter related to the size of the resource allocate to said burst is comprised in a predefined length range.

10. Base station for use in a radio communication network, said base station being dedicated to send frames on an air interface, each frame comprising a plurality of bursts, said base station comprising : - means for scheduling the bursts in said frame; - means for sorting the bursts to be contained in said frame by depending on a parameter related to the size of the resource allocated to said bursts; - means for performing said resource allocation depending on said sorting; - means for transmitting said frame in said radio communication system.
